# EUROPEAN PATENT APPLICATION

(11) **EP 4 819 600 A1**
(43) Date of publication of application: **07.10.2026**
(21) Application number: 25305467.0
(22) Date of filing: 31.03.2025
(51) Int. Cl.: H04N 19/11, H04N 19/147, H04N 19/176, H04N 19/192

(54) **TEMPLATE-BASED INTRA MODE DERIVATION SIMPLIFICATIONS**

(71) Applicant: InterDigital CE Patent Holdings, SAS, 75017 Paris (FR)
(72) Inventor: REUZE, Kevin, 35700 RENNES (FR); NASER, Karam, 35250 MOUAZE (FR); GALPIN, Franck, 35235 THORIGNE-FOUILLARD (FR); POIRIER, Tangi, 35235 THORIGNE-FOUILLARD (FR)
(74) Representative: Interdigital

(57) **Abstract**

A first prediction mode of lowest index and a second prediction mode of highest index are obtained. A first prediction error is determined on a template for the first prediction mode and a second prediction error is determined for the second prediction mode.

Responsive to the first prediction error being lower than the second prediction error, the second prediction mode is updated (a) as being equal to an average of the lowest index and the highest index and an updated second prediction error is determined.

Responsive to the second prediction error being lower than the first prediction error, the first prediction mode is updated (b) as being equal to an average of the lowest index and the highest index and an updated first prediction error is determined. Steps a) and b) are repeated until an end criterion. The intra prediction mode with smallest prediction error is selected.

## Description

### BACKGROUND

The present application is related to methods and apparatuses for video encoding and decoding, e.g., using intra prediction.

### BRIEF SUMMARY

Briefly stated, in one embodiment, a method of video decoding (video encoding respectively) is disclosed. At least one intra prediction mode is obtained and a current block is decoded (encoded respectively) using the at least one intra prediction mode.
The at least one intra prediction mode may be obtained as follows.:
A first prediction mode of lowest index and a second prediction mode of highest index are obtained from an indexed list of intra prediction modes. A first prediction error is determined on a template of a current block for the first prediction mode and a second prediction error is determined on a template of the current block for the second prediction mode.
Responsive to the first prediction error being lower than the second prediction error, the second prediction mode is updated (a) as a prediction mode of index equal to an average of the lowest index and the highest index and an updated second prediction error is determined.
Responsive to the second prediction error being lower than the first prediction error, the first prediction mode is updated (b) as a prediction mode of index equal to an average of the lowest index and the highest index and an updated first prediction error is determined. Steps a) and b) are repeated until an end criterion is met. The intra prediction mode with smallest prediction error is selected.

In another embodiment, another method of video decoding (video encoding respectively) is disclosed. A most probable mode (MPM) list is obtained that is associated with a current block comprising a primary list of most probable modes and a secondary list of most probable modes. A prediction error is determined on a template of the current block by testing the most probable modes of the primary list and only a subset of the most probable modes of the second list. At least one mode associated with a lowest prediction error is selected. The current block is decoded (encoded respectively) using the selected at least one mode.
Corresponding video encoding apparatuses and video decoding apparatuses are also disclosed.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 depicts 65 directional intra prediction modes along with additional Wide Angle Intra Prediction Modes (WAIP) with dotted lines;
FIG. 5 depicts neighbouring blocks (L, A, BL, AR, AL) used in the derivation of a general MPM list ;
FIG. 6 illustrates the principles of Template-based Intra Mode Derivation (TIMD);
FIG. 7 is a block diagram illustrating an example method for template-based intra mode derivation ;
FIG. 8 illustrates an example of extended modes that can be evaluated by the TIMD search ;
FIG. 9 is a block diagram illustrating an example of a method for decoding a current block according to an embodiment ;
FIG. 10-11 are block diagrams illustrating examples of a method for selecting a TIMD mode according to an embodiment; and
FIGs 12-13 are block diagrams illustrating examples of a method for obtaining an intra prediction mode according to various embodiments.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

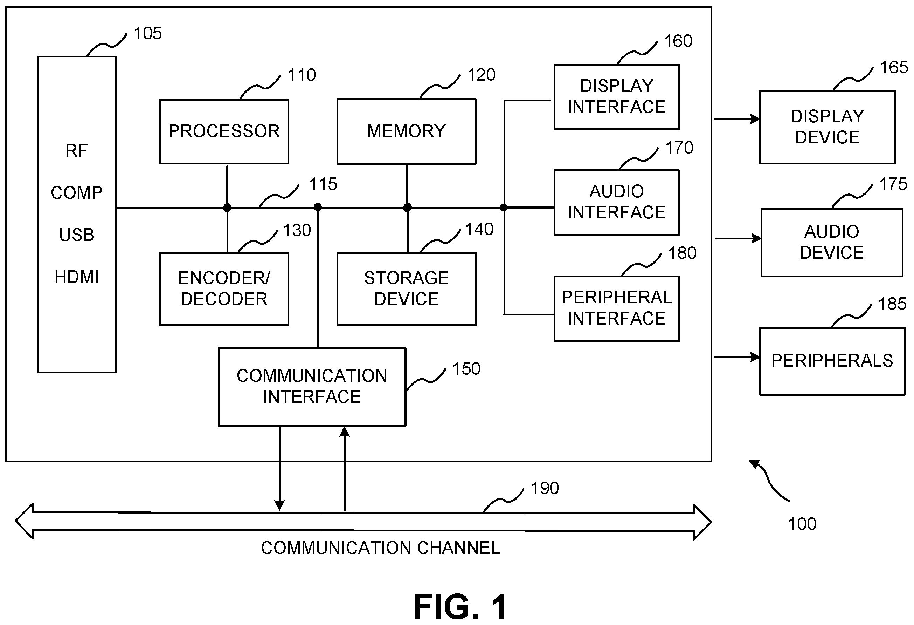

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

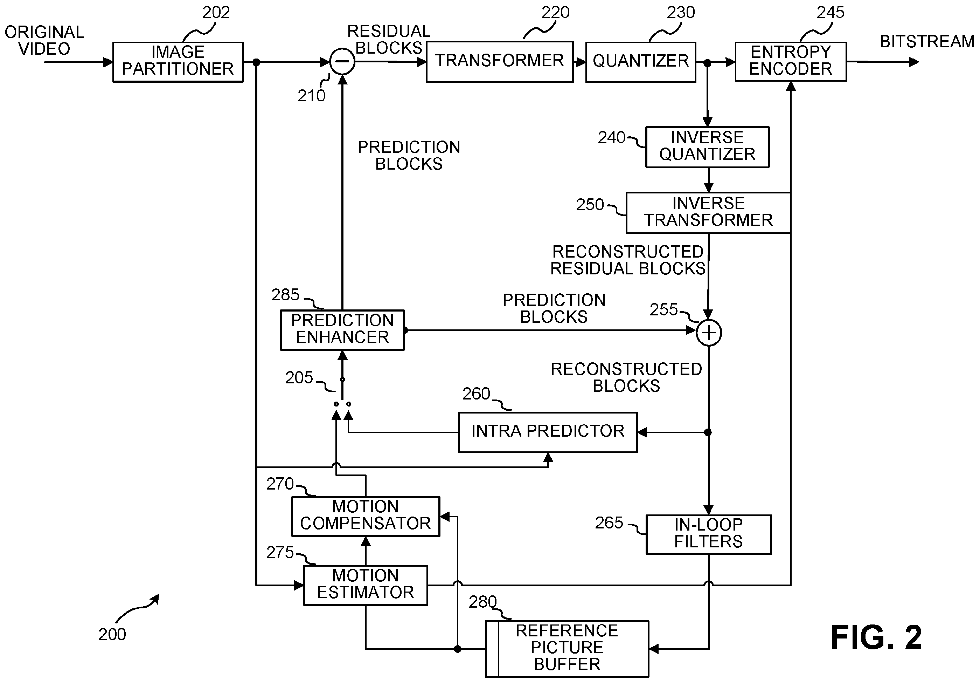

**FIG. 2** is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

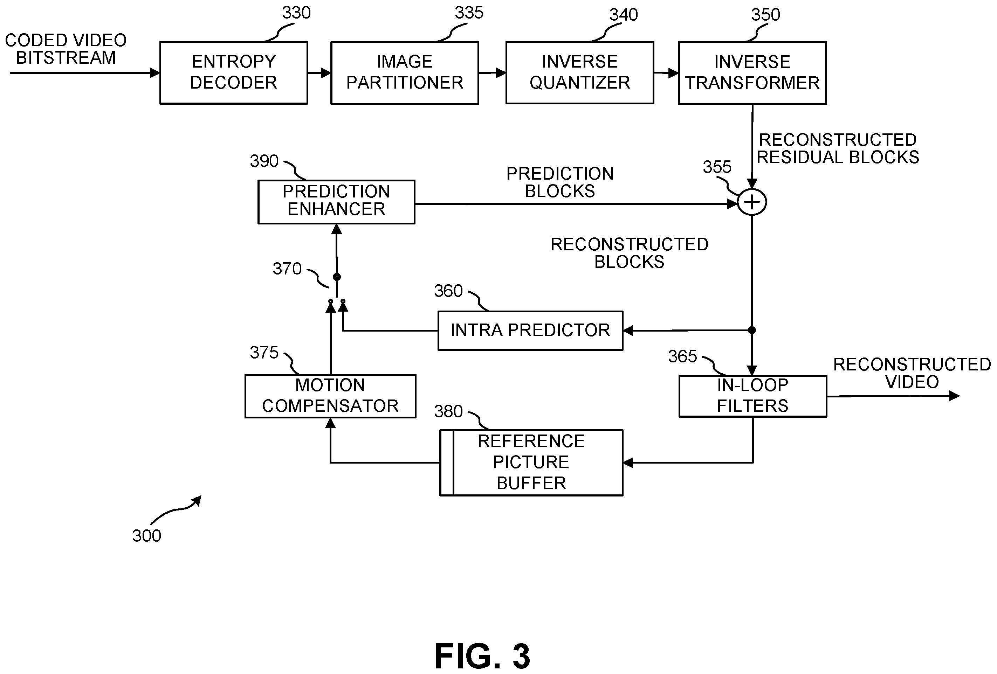

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

**FIG. 3** is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

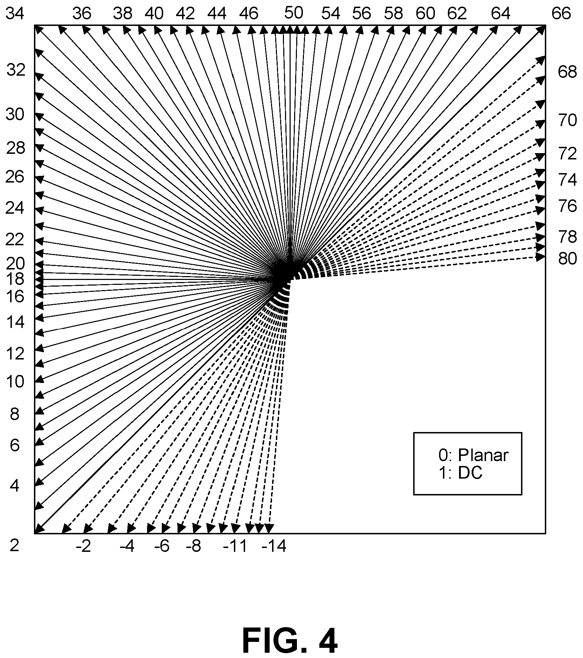

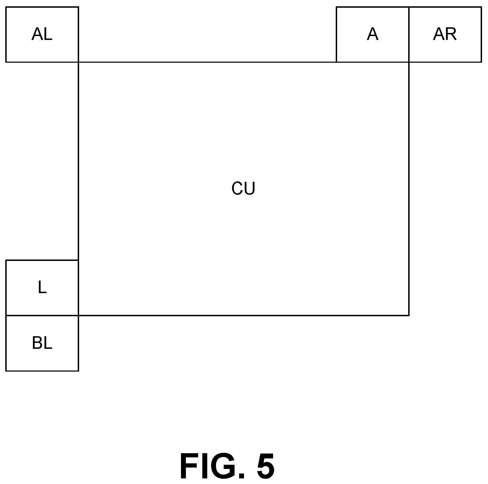

Intra prediction is a coding tool in video coding (e.g., hybrid video coding). Intra prediction may be used to make predictions for blocks. An encoder may select an (e.g., the best) intra prediction mode (IPM), for example, in terms of rate-distortion. The encoder may signal an index (e.g., an index associated with the selected intra prediction mode) to the decoder. A decoder can use the signaled index to perform the same prediction for a (e.g., each) block performed by the encoder. Signaling the index of the selected intra prediction mode may add extra overhead, reducing the gain from intra prediction. The index of the intra prediction mode selected to predict a given block may be coded using a set of Most Probable Modes (MPMs), which may reduce the signaling overhead, for example, if the index of the selected intra prediction mode belongs to the list. Signaling an intra prediction mode index using a set of MPMs may be referred to as MPM list-based signaling. Video coding, e.g., using VVC and/or HEVC, may be implemented with MPM list-based signaling. In other video coding implementations (e.g., ECM) multiple (e.g., two) MPM lists (e.g., instead of one MPM list) may be implemented. Herein, the signaling of a mode index, such as MPM list-based signaling, may be referred to as the signaling of a mode.
Signaling overhead may be (e.g., additionally and/or alternatively) limited (e.g., by ECM) using one or more tools based on (e.g., derived from) decoded pixels surrounding a given block (e.g., in intra prediction mode) that may be used (e.g., are likely the best) for predicting the block (e.g., in terms of rate-distortion). A first video coding tool may be Decoder-side Intra Mode Derivation (DIMD). A second video coding tool may be Template-based Intra Mode Derivation (TIMD). Signaling overhead may be reduced, for example, using the first and/or second tool. Signaling the tool may enable a decoder to obtain the indices of the (e.g., likely best) intra prediction modes. In examples (e.g., using DIMD), a template of decoded pixels above and/or on the left side of a current block may be analyzed to deduce the directionalities of the template, from which one or more (e.g., two) directional intra prediction modes may be selected. A prediction signal may be generated, for example, by blending multiple (e.g., two) modes. In examples (e.g., using TIMD), several intra prediction modes may be tested on a template of decoded pixels above and/or on the left side of a current block. One or more (e.g., two) modes yielding the smallest Sum of Absolute Transform Differences (SATDs) or Sum of Absolute Differences (SAD) between the template of reconstructed samples and the prediction of the template may be selected (e.g., retained or kept). A prediction signal of the current block may be generated, for example, by applying the mode with the smallest SATD or blending multiple (e.g., two) modes.
Intra prediction mode signaling may be provided in various video coding tools (e.g., ECM) and TIMD. In examples, 67 intra prediction modes may be provided as core intra prediction modes comprising 65 angular intra prediction modes and 2 non-angular intra prediction modes, e.g., Planar and DC prediction modes. Planar and DC are used to predict smooth and gradually changing regions, whereas angular (e.g., angle defined from 45 degrees to -135 degrees in clockwise direction) prediction modes are used to capture different directional structures.
Intra prediction mode signaling may be implemented, for example, in ECM. Intra prediction mode signaling may include signaling in luminance. An index may be signaled identifying an intra prediction mode in an MPM list of a coding block (CB), a.k.a. current block, e.g., if the intra prediction mode selected to predict the current luminance CB is not DIMD, not a Matrix-based Intra Prediction (MIP) mode, not TIMD, and/or is one of 67 intra prediction modes (e.g., as described herein). In VVC, for a non-square block, the regular directional intra prediction modes which are not allowed may be replaced with wide-angle intra prediction modes. **FIG. 4** depicts the 65 directional intra prediction modes along with additional Wide Angle Intra Prediction Modes (WAIP) with dotted lines. An MPM list (e.g., in ECM) may be decomposed into a list of one or more (e.g., including 6 entries) primary MPMs (a.k.a. PMPM list) and a list of one or more (e.g., including 16 entries) secondary MPMs (a.k.a SPMP list). A general MPM list (e.g., with 22 entries) may first be obtained (e.g., constructed). The first, for example, 6 entries in this general MPM list are then included into the PMPM list, and the rest of entries form the SMPM list. The first entry in the general MPM list may be the Planar mode. The remaining entries may comprise the intra modes of the left (L), above (A), below-left (BL), above-right (AR), and above-left (AL) neighbouring blocks of the current block as shown in **FIG. 5****,** and DIMD modes which may be sorted in ascending order of SAD cost. Up to, for example, five modes with the smallest SAD cost may be added. The SAD cost is computed between the prediction and the reconstruction samples of the template. The sorted directional modes with added offset are added into the general MPM list, and then default modes, until the general MPM list with 22 entries is obtained. If/when a current block is vertically oriented, the order of neighbouring blocks may be A, L, BL, AR, AL; otherwise, it may be L, A, BL, AR, AL. The MPM list may be equally divided into four groups. In an example, the group index may be parsed (signaled respectively) first. Then, a mode index may be further parsed (signaled respectively) to indicate which mode in the selected group is used. The index may be parsed (signaled respectively) if the intra prediction mode selected to predict the current luminance CB is not DIMD, not a Matrix-based Intra Prediction (MIP) mode, not TIMD, and/or is one of 67 intra prediction modes (e.g., as described herein)

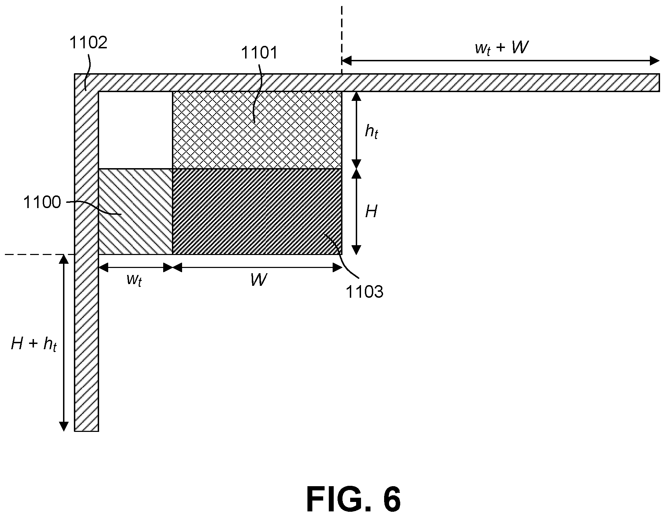

Template-based Intra Mode Derivation (TIMD) may be implemented. Intra prediction mode derivation via TIMD may be applied (e.g., the same way) on encoder and decoder sides for a given luminance, such as CB (1103) or current block shown in **FIG. 6****.** Based on an (e.g., each) intra prediction mode in the MPM list of the luminance CB, a prediction of the template (1100 and 1101) may be determined of the luminance CB from decoded (reconstructed) reference samples (1102) of the template. The SATD between the prediction and the template may be calculated. The (e.g., two) intra prediction mode(s) with the minimum (e.g., smallest) SATDs may be selected as the TIMD mode(s). The set of directional intra prediction modes (e.g., for TIMD) may be extended (e.g., from 65 modes to 129 modes), for example, by inserting a direction between each neighboring solid black lines in FIG. 4 (indexed from 2 to 66). The set of possible intra prediction modes derived via TIMD may thus gather 131 modes (129 angular modes, DC mode and Planar mode). In the latter case, the precision of the intra prediction modes is said to be increased compared to the case where only 67 modes are used.

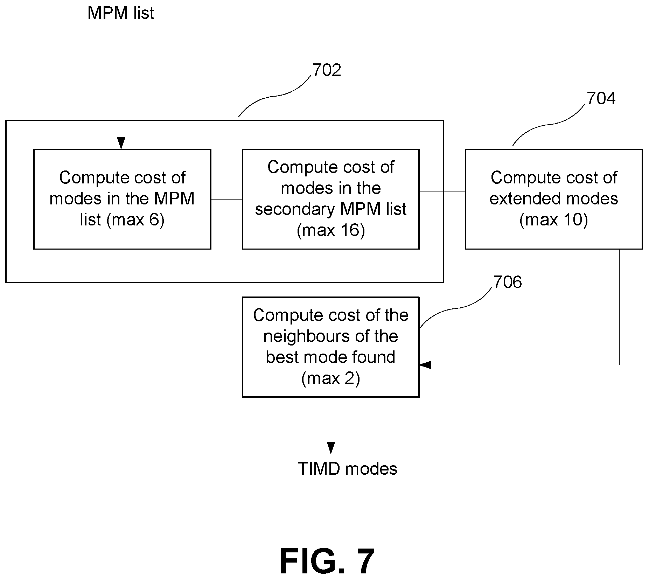

In a specific example (e.g., in ECM), the TIMD modes may be selected in the IPM of the MPM list and possibly in a list of extended modes by several steps as illustrated on **FIG. 7****.**
In a first step (702), also known as first pass, the (e.g., all) IPMs included in the MPM list are evaluated on the template. This can include up to 22 modes (e.g., 6 from the primary MPM list and 16 from the secondary MPM list). This total may be further increased to 25 as Planar, horizontal IPM and vertical IPM may be added in the list. This consists in the first two blocks in FIG. 7.
In a second step (704), also known as second pass, extended modes may be evaluated (e.g., modes usually not allowed as IPMs for this block size or block width/block height ratio) depending on the availability of the top right and bottom left reference samples. This may be done by first computing the new smallest IPM (smallest in terms of mode index) allowed to be used on this block, depending on the availability of the bottom left reference samples, and the new highest IPM allowed (highest in terms of mode index), depending on the availability of the top right reference samples. Then, 1 in 5 modes from the extended list may be included (e.g., only modes which are out of the original range of IPMs are added with this process).

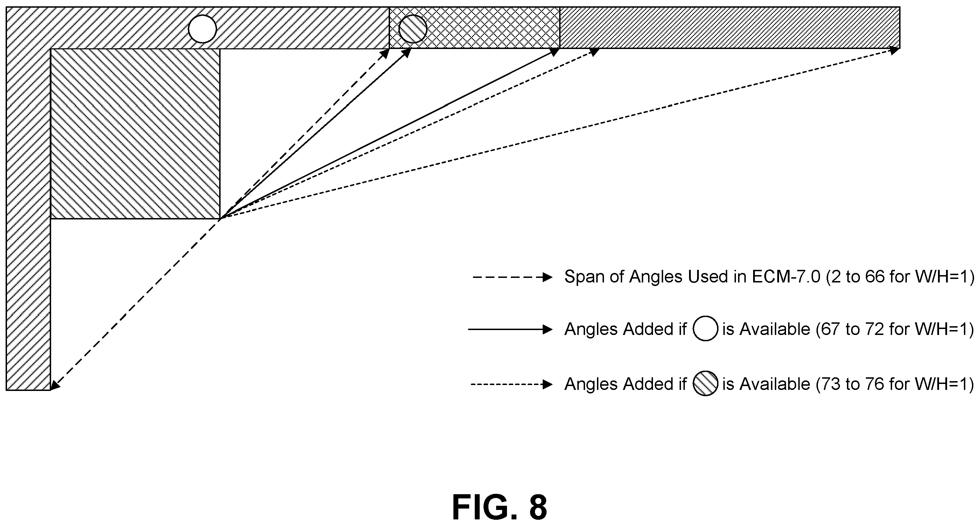

**FIG. 8** illustrates an example of extended modes that can be evaluated by the TIMD search. Wide Angle Intra Prediction Modes (WAIP) are usually not allowed as IPMs for square block. However, extended modes selected among the Wide Angle Intra Prediction Modes (WAIP) may be evaluated during TIMD search. To this aim, if the current luma CB uses TIMD, the availability of the above right and bottom left reference samples may be checked. If those samples are available, WAIP may be added to the TIMD search as extended modes. As shown on FIG. 8, for a block for which W/H=1 (i.e., a square block), angles normally reserved for W/H=2 and W/H=4 may be added to the TIMD search if the samples at the white position and at the black position are available reconstructed samples. Similarly, this is done by checking the left and bottom left samples to add angles normally reserved for W/H=1/2 and W/H=1/4. This may be applied to rectangular block also. For example, If/when W/H=2, angles normally reserved for W/H=4 and W/H=8 may be added to the TIMD search if the samples located on the top-right are available and angles normally reserved for W/H=1 et W/H=½ may be added if the samples located bottom left are available.
No extra signaling is needed.
In a third step (706), also known as third pass, the neighbors of the two best modes found in the first two steps 702 and 704 (i.e., the two modes with the smallest SATD template cost) are evaluated. Those are the neighbors with increased precision, i.e., using the 131 IPMs. The third pass is also called refining pass in the following.
It is noted that while the first and second steps do not depend on each other (i.e. they can be done in parallel), the third step needs both the first and second steps to be finished, to know which are the best modes, in order to proceed.

The current luminance CB may be predicted via TIMD, for example, by fusing the (e.g., two or three) predictions of the luminance CB via the (e.g., two or three) TIMD modes resulting from the (e.g., two) passes of tests with weights (e.g., after applying PDPC). The weights (e.g., computed weights) used may depend on the prediction SATDs of the (e.g., two or three) TIMD modes. In examples, the generated prediction may be based on computed weights. The computed weights may include a first computed weight associated with a tested first intra prediction mode and a second weight associated with a tested second intra prediction mode.

In a specific example, for each intra prediction mode in the MPM list, as well as the wide-angle modes if the above-right and/or bottom-left reference samples are available, SATD between the prediction and reconstruction samples of the template is calculated. First, two intra prediction modes with the lowest SATD costs and one non-angular intra prediction mode (i.e., DC or Planar) with the lowest SATD cost are selected as the TIMD modes. These three TIMD modes may be fused with weights (e.g., after applying PDPC process) into a weighted intra prediction. The weighted intra prediction may used to encode (decode respectively) the current block (CU). Position dependent intra prediction combination (PDPC) may be included in the derivation of the TIMD modes.
The conditions below are checked to determine whether the non-angular intra prediction mode is used in fusion:
- the non-angular intra prediction mode is different from the two selected intra prediction modes.
- costMode3 < 1.5*costMode1, where the costMode3 is the SATD cost of the non-angular intra prediction mode and costMode1 is the SATD cost of the first intra prediction mode.
If both of the conditions are true, three intra prediction modes are used to generate the prediction. The weights of each intra prediction mode are computed from SATD cost as follows: ${weight}_{i} = \frac{sumSATD - {costMode}_{i}}{2 \times sumSATD} , sumSATD = {\sum }_{j = 1}^{3} {costMode}_{i} .$ Otherwise, the non-angular intra prediction mode is not used in prediction. The costs of the two selected modes (i.e., the two intra prediction modes with the lowest SATD costs) are compared with a threshold, in the test the cost factor of 2 is applied as follows: $costMode 2 < 2 * costMode 1 .$ If this condition is true, the fusion between the two intra prediction modes with the lowest SATD costs is applied, otherwise only model is used, i.e., only the intra prediction mode associated with costMode1 is used in the intra prediction.
In a case where the fusion between the two intra prediction modes with the lowest SATD costs is applied, weights of two intra prediction modes may be computed from their SATD costs as follows: $weight 1 = costMode 2 / \left(costMode1+costMode2\right)$ $weight 2 = 1 - weight 1$ The division operations are conducted using the same lookup table (LUT) based integerization (quantization in integer) scheme used by CCLM (acronym of Cross component linear model).
Besides, location-dependent sample-based fusion used in DIMD fusion process is used for the TIMD fusion but the location-dependent criterion applying to amplitudes of the selected predictors is replaced by a SATD cost-based criteria. The location-dependent criterion is determined from a ratio of the normalized SATD of the selected TIMD predictors computed in above and left template area.
TIMD may be difficult to implement, both due to the high number of SATD computations to be done by the decoder and the latency introduced by the third step (706) of template computations (which needs to wait for the first two steps, 702-704, to proceed).
To this aim, a decoding method (encoding method respectively) is proposed that reduces the complexity of TIMD. The main complexity reduction comes from reducing the number of modes tested by TIMD. In an example, some modes from the secondary MPM list are not included and thus not tested. In another example, the number of steps is reduced so that there are fewer latency issues. In a last example, TIMD search is modified to a binary search to find the best mode in fewer computations.
To reduce the complexity of TIMD, especially at the decoder side, the number of modes tested on the template by TIMD may be limited.

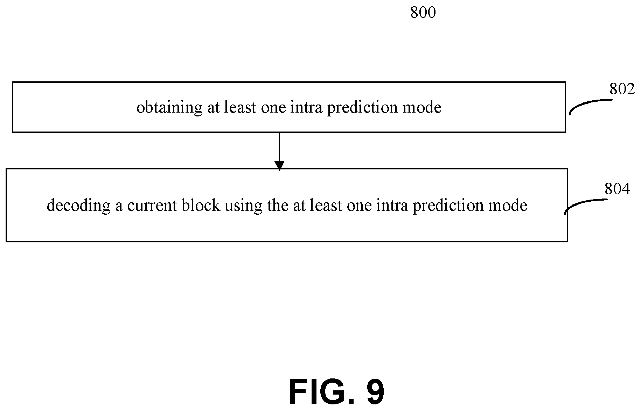

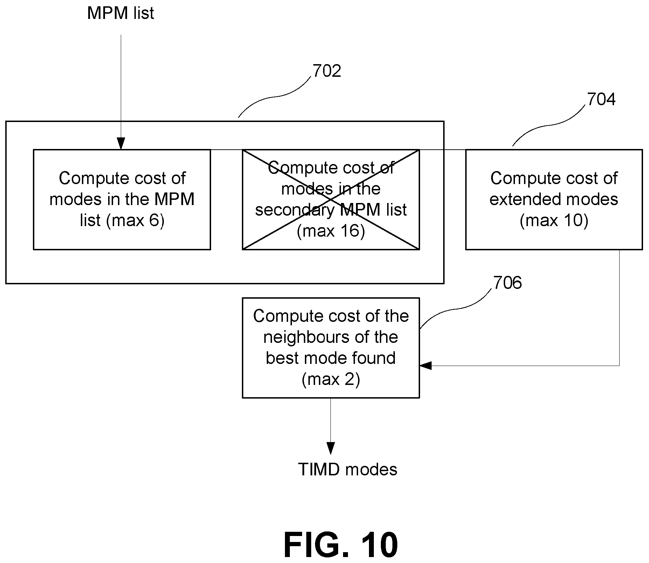

**FIG. 9** is a block diagram illustrating an example of a method 800 for decoding a current block according to an embodiment. At least one intra prediction mode (e.g., a TIMD mode) is obtained (802), e.g., using any one of the methods illustrated on FIGs 10-13. The current block is then decoded using the at least one intra prediction mode (804).

**FIG. 10** is a block diagram illustrating an example of a method for selecting a TIMD mode according to an embodiment. In the example of FIG. 10, no modes from the secondary MPM list are tested on the template.
In some variants, a fixed maximum number of N SATD evaluations on the templates can be performed (e.g., N=25). In some variants, the process described with reference to FIG. 7 is performed normally for the first and second steps (702 and 704), with a maximum number of SATD evaluations of N-4 and the 4 remaining ones are kept for the third step (706), i.e., for the refining.
In some examples, the value of N may be chosen as a configuration parameter and transmitted, e.g., as a PPS flag when TIMD is in use.
In some variants, for the second step (704), which adds extended modes to be tested, a reduced number of modes is evaluated. For example, only one mode is added on each side of the IPM range. In an example, the IPM range comprises the intra mode indexed from 2 to 66, thus the range of intra modes usable for the block. The extended modes may thus have negative indices or indices above 66. This extended mode added on each side of the IPM range can be chosen to be the one in the middle of the extended range on both sides of the IPM range. In some variants, more than one (e.g., 3) extended modes are added on both sides of the IPM range. Those 3 modes are not added if/when the bottom left (top right respectively) reference samples are not available).
In a variant, the number modes initially tested in the first and second steps (702, 704), e.g., from the MPM list, and/or from the secondary MPM list, and/or from the extended modes, may be reduced. In an example, only one quarter of the 16 secondary modes may be tested, e.g., 1 mode every 4 modes. More generally, one every M modes may be tested. On the contrary, the number of modes tested in the third step (706), i.e., the refinement step which determines (e.g., computes) the costs of the neighbours of the best mode found so far, may be increased for coding efficiency. For example, the costs of the neighbours of the 3 best modes found so far may be determined instead of 2. This solution keeps the same latency for the decoder but can increase the coding efficiency compared to simply removing some cost evaluations and reducing the overall complexity. In some variants, instead of evaluating the costs of 2 neighbours (mode+1 and mode-1) it is proposed to evaluate the cost of 4 neighbours (mode+1, mode+2, mode-1 and mode-2, if they are available). (mode+k) means that mode's index increased by k and (mode-k) means that mode's index decreased by k. For the extreme indices, e.g., 2 and 130, the formula may be slightly different. More generally, (mode+k) means that mode's index is equal to (mode+126-N)%128 +2, where % is the modulo operator and (mode-k) means that mode's index is equal to (mode-2+N)%128+2.
In some variants, if/when a new mode is added to the list of modes to be tested in SATD for the TIMD process, it is first checked if one of its neighboring modes is already included in the list. If a neighboring mode is already present in the list then the new mode is not added, e.g., not to add SATD computations for modes that would be too similar. Determining a cost may comprise calculating or computing the cost.

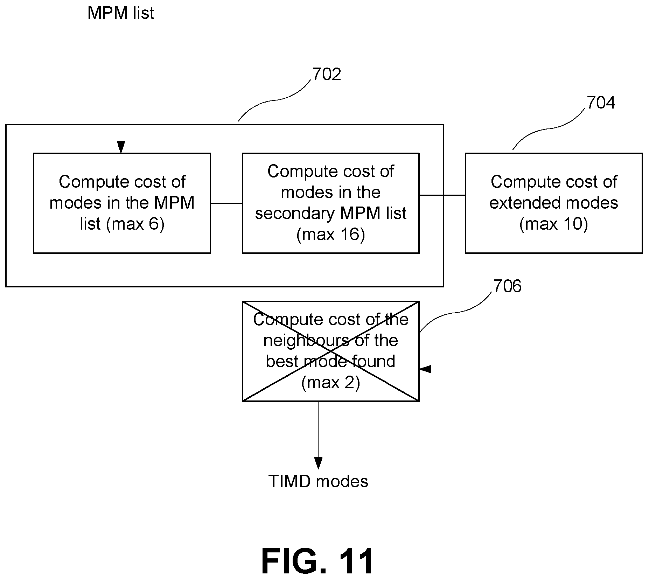

**FIG. 11** is a block diagram illustrating an example of a method for selecting TIMD mode according to an embodiment. In the example of FIG. 11, the third step (706) is not (never) performed. Therefore, in this case, the precision of the Intra Prediction Modes used by TIMD may be put back to 67 instead of 131, as the (e.g., all the) modes tested use this precision.
In some embodiments, the third step (706) is only applied for bigger blocks (e.g., for blocks for which the (width * height) > 64) to keep the benefits of the higher precision while reducing the complexity for smaller blocks. Thus, the latency is reduced for the smaller blocks that are usually the worst cases.
In some examples, the refinement step (706) is included in the first steps. That is, when a mode has its cost evaluated, its neighbours (in precision 131 modes) are systematically added to the list. While this process determines more costs than the 'regular' refinement step, it can be done in parallel with the non-refinement steps (702 and 704). Therefore, the latency is reduced compared to a process determining fewer costs sequentially.

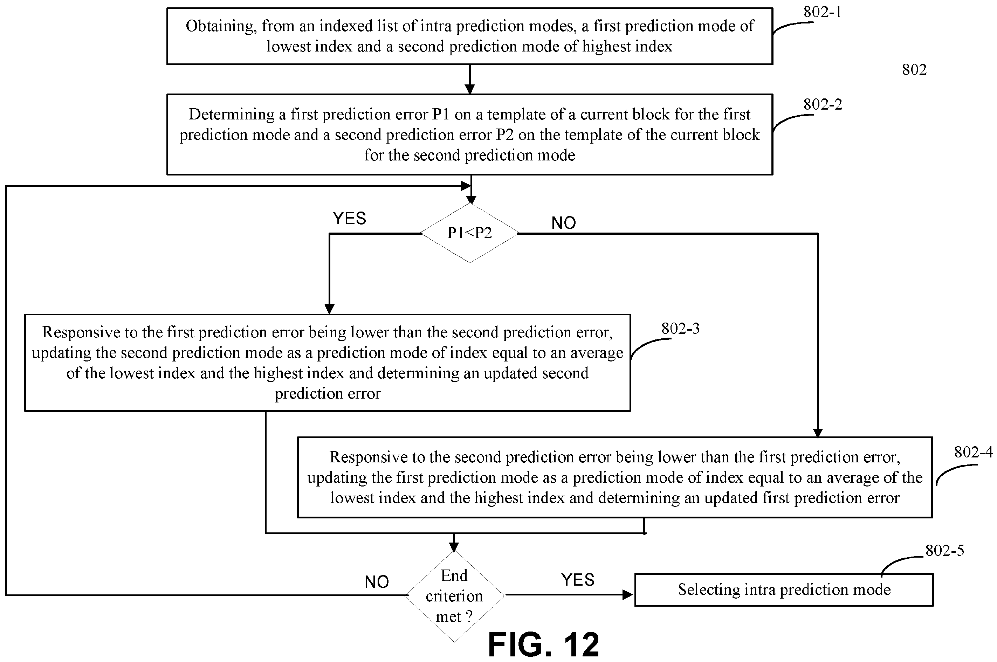

**FIG. 12** is a block diagram illustrating an example of a method for obtaining (802) an intra prediction mode according to an embodiment. A first prediction mode of lowest index and a second prediction mode of highest index are obtained (802-1) from an indexed list of intra prediction modes, e.g., a MPM list.
A first prediction error (a.k.a. first cost) is determined (802-2) on a template of a current block for the first prediction mode and a second prediction error (a.k.a. second cost) is determined (802-2) on the template of the current block for the second prediction mode.
Responsive to the first prediction error being lower than the second prediction error, the second prediction mode is updated (802-3) as a prediction mode of index equal to an average of the lowest index and the highest index and an updated second prediction error is determined (802-3). Responsive to the second prediction error being lower than the first prediction error, the first prediction mode is updated (802-4) as a prediction mode of index equal to an average of the lowest index and the highest index and an updated first prediction error is determined (802-4).
The steps (802-3) and (802-4) are repeated until an end criterion is met. In an example, the end criterion is when first and second modes are equal. In another example, the process stopped if/when one prediction error is smaller than a threshold times the minimal prediction error between PLANAR and/or DC, e.g., 2.5 times smaller than the prediction error of PLANAR.
The intra prediction mode with smallest prediction error is selected (802-5) as the intra prediction mode to be used to encode the current block.

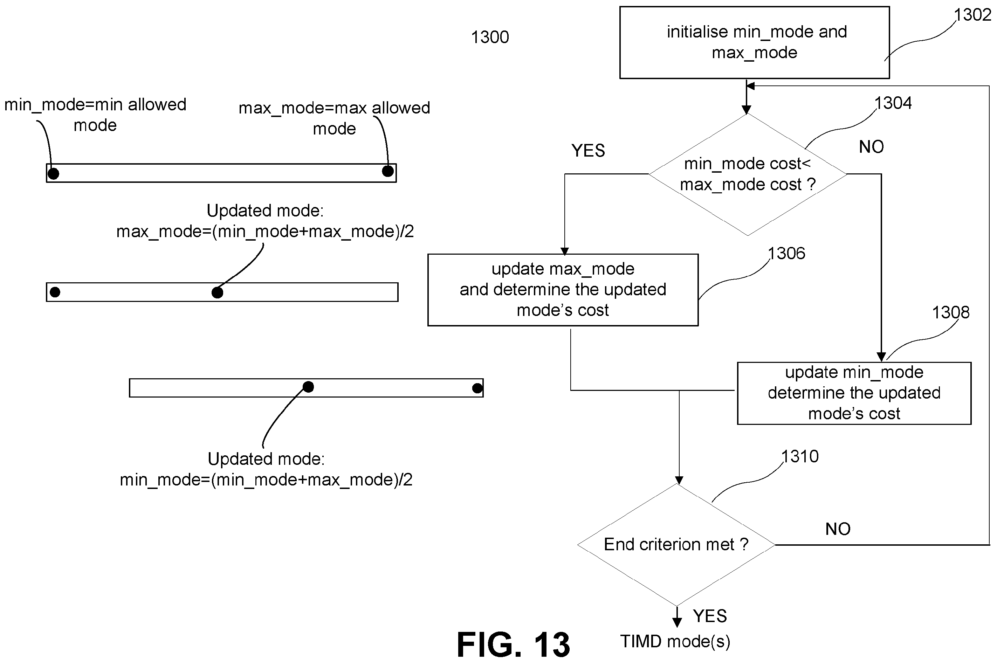

**FIG. 13** is a block diagram illustrating an example of a method (1300) for selecting TIMD mode using binary search according to an embodiment. Indeed, in some examples where latency is not a critical issue for TIMD, the method for finding the best mode may be changed to a binary search.
Minimum allowed mode and maximum allowed mode are obtained (1302) based on mode index. In an example, min_mode is initialized to minimum allowed mode index and max_mode is initialized to maximum allowed mode index, excluding Planar and DC.
If cost (e.g., SADT cost) associated with min_mode is smaller than the cost associated with max_mode (1304), an updated max_mode is determined (1306) as follows: max_mode=(min_mode+max_mode)/2. The cost of the updated mode is also determined (1306). If the cost (e.g., SADT cost) associated with min_mode is greater than the cost associated with max_mode, an updated min_mode is determined (1308) as follows: min_mode=(min_mode+max_mode)/2. The cost of the updated mode is also determined (1308). The steps 1306 and 1308 are repeated until an end criterion is met (1310).
Once the end criterion is met (1310), the mode with the smallest cost is the one selected for TIMD.
In some variants, the binary search is initialised with the minimum and maximum values of the IPMs allowed for the current block (i.e., the modes corresponding to IPM indices 2 to 66, or 2 to 130 with TIMD precision). In some variants, extended modes (modes not usually allowed for the given block size) are also included. In some variants this inclusion is based on the availability of the reference samples top right and bottom left of the block.
In some variants, the binary search is initialized with the minimum and maximum IPMs from the list of modes that would have been tested in the regular TIMD search. That is, the minimum mode from the combination of the MPM list, secondary MPM list, and extended mode list.
In some variants the process continues until min_mode and max_mode are equal.
In some variants, the costs of the PLANAR and/or DC modes are determined before the initialisation, and the process is stopped if one cost found is smaller than a threshold times the minimal cost between PLANAR and/or DC (e.g. if the found cost is 2.5 times smaller than the cost of PLANAR). In some variants the found cost has to be under the threshold times the smallest cost between all initialisation modes (e.g., min_mode, max_mode, PLANAR and/or DC). In variants where PLANAR and/or DC are evaluated, if the found cost when min_mode and max_mode are equal is not smaller to the cost of PLANAR and/or DC, then the mode between the two which has the smallest cost is the one selected for TIMD.
The methods illustrated by FIG. 10-13 may be applied similarly on the encoder side to select an intra prediction mode to be used for encoding a current block.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video decoding comprising :
obtaining at least one intra prediction mode ; and
decoding a current block using the at least one intra prediction mode;
wherein obtaining at least one intra prediction mode comprises :
obtaining, from an indexed list of intra prediction modes, a first prediction mode of lowest index and a second prediction mode of highest index;
determining a first prediction error on a template of a current block for the first prediction mode and a second prediction error on the template of the current block for the second prediction mode; and
a) responsive to the first prediction error being lower than the second prediction error, updating the second prediction mode as a prediction mode of index equal to an average of the lowest index and the highest index and determining an updated second prediction error; and
b) responsive to the second prediction error being lower than the first prediction error, updating the first prediction mode as a prediction mode of index equal to an average of the lowest index and the highest index and determining an updated first prediction error;
repeating a) and b) until an end criterion is met; and
selecting the intra prediction mode with smallest prediction error.

2. A method of video decoding comprising:
obtaining a most probable mode (MPM) list associated with a current block comprising a primary list of most probable modes and a secondary list of most probable modes;
determining a prediction error on a template of the current block by testing the most probable modes of the primary list and only a subset of the most probable modes of the second list;
selecting at least one mode associated with a lowest prediction error; and
decoding the current block using the selected at least one mode.

3. The method of claim 2, wherein the subset of the most probable modes of the second list is empty.

4. The method of claim 2 or 3, wherein determining a prediction error on a template of the current block by testing the most probable modes of the primary list and only a subset of the most probable modes of the second list further comprises testing only one additional intra prediction modes on each side of an intra prediction mode range.

5. The method of claim 2, wherein determining a prediction error on a template of the current block by testing the most probable modes of the primary list and only a subset of the most probable modes of the second list further comprises testing at least two additional intra prediction modes neighboring two modes with lowest prediction error found so far.

6. The method of claim 5, wherein testing at least two additional intra prediction modes neighboring two modes with lowest prediction error found so far is only applied for bigger blocks.

7. A method of video encoding comprising :
obtaining at least one intra prediction mode ; and
encoding a current block using the at least one intra prediction mode;
wherein obtaining at least one intra prediction mode comprises :
obtaining, from an indexed list of intra prediction modes, a first prediction mode of lowest index and a second prediction mode of highest index;
determining a first prediction error on a template of a current block for the first prediction mode and a second prediction error on the template of the current block for the second prediction mode; and
a) responsive to the first prediction error being lower than the second prediction error, updating the second prediction mode as a prediction mode of index equal to an average of the lowest index and the highest index and determining an updated second prediction error; and
b) responsive to the second prediction error being lower than the first prediction error, updating the first prediction mode as a prediction mode of index equal to an average of the lowest index and the highest index and determining an updated first prediction error;
repeating a) and b) until an end criterion is met; and
selecting the intra prediction mode with smallest prediction error.

8. A method of video encoding comprising:
obtaining a most probable mode (MPM) list associated with a current block comprising a primary list of most probable modes and a secondary list of most probable modes;
determining a prediction error on a template of the current block by testing the most probable modes of the primary list and only a subset of the most probable modes of the second list;
selecting at least one mode associated with a lowest prediction error; and
encoding the current block using the selected at least one mode.

9. The method of claim 8, wherein the subset of the most probable modes of the second list is empty.

10. The method of claim 8 or 9, wherein determining a prediction error on a template of the current block by testing the most probable modes of the primary list and only a subset of the most probable modes of the second list further comprises testing only one additional intra prediction modes on each side of an intra prediction mode range.

11. The method of claim 8, wherein determining a prediction error on a template of the current block by testing the most probable modes of the primary list and only a subset of the most probable modes of the second list further comprises testing at least two additional intra prediction modes neighboring two modes with lowest prediction error found so far.

12. The method of claim 11, wherein testing at least two additional intra prediction modes neighboring two modes with lowest prediction error found so far is only applied for bigger blocks.

13. A video decoding apparatus comprising one or more processors and at least one memory coupled to said one or more processors, wherein said one or more processors are configured to perform:
obtaining at least one intra prediction mode ; and
decoding a current block using the at least one intra prediction mode;
wherein obtaining at least one intra prediction mode comprises :
obtaining, from an indexed list of intra prediction modes, a first prediction mode of lowest index and a second prediction mode of highest index;
determining a first prediction error on a template of a current block for the first prediction mode and a second prediction error on the template of the current block for the second prediction mode; and
a) responsive to the first prediction error being lower than the second prediction error, updating the second prediction mode as a prediction mode of index equal to an average of the lowest index and the highest index and determining an updated second prediction error; and
b) responsive to the second prediction error being lower than the first prediction error, updating the first prediction mode as a prediction mode of index equal to an average of the lowest index and the highest index and v an updated first prediction error;
repeating a) and b) until an end criterion is met; and
selecting the intra prediction mode with smallest prediction error.

14. A video encoding apparatus comprising one or more processors and at least one memory coupled to said one or more processors, wherein said one or more processors are configured to perform:
obtaining at least one intra prediction mode ; and
encoding a current block using the at least one intra prediction mode;
wherein obtaining at least one intra prediction mode comprises :
obtaining, from an indexed list of intra prediction modes, a first prediction mode of lowest index and a second prediction mode of highest index;
determining a first prediction error on a template of a current block for the first prediction mode and a second prediction error on the template of the current block for the second prediction mode; and
a) responsive to the first prediction error being lower than the second prediction error, updating the second prediction mode as a prediction mode of index equal to an average of the lowest index and the highest index and determining an updated second prediction error; and
b) responsive to the second prediction error being lower than the first prediction error, updating the first prediction mode as a prediction mode of index equal to an average of the lowest index and the highest index and determining an updated first prediction error;
repeating a) and b) until an end criterion is met; and
selecting the intra prediction mode with smallest prediction error.

15. A video decoding apparatus comprising one or more processors and at least one memory coupled to said one or more processors, wherein said one or more processors are configured to perform:
obtaining a most probable mode (MPM) list associated with a current block comprising a primary list of most probable modes and a secondary list of most probable modes;
determining a prediction error on a template of the current block by testing the most probable modes of the primary list and only a subset of the most probable modes of the second list;
selecting at least one mode associated with a lowest prediction error; and
decoding the current block using the selected at least one mode.

16. A video encoding apparatus comprising one or more processors and at least one memory coupled to said one or more processors, wherein said one or more processors are configured to perform:
obtaining a most probable mode (MPM) list associated with a current block comprising a primary list of most probable modes and a secondary list of most probable modes;
determining a prediction error on a template of the current block by testing the most probable modes of the primary list and only a subset of the most probable modes of the second list;
selecting at least one mode associated with a lowest prediction error; and
encoding the current block using the selected at least one mode.
